# EUROPEAN PATENT APPLICATION

(11) **EP 3 975 088 A1**
(43) Date of publication of application: **30.03.2022**
(21) Application number: 20198995.1
(22) Date of filing: 29.09.2020
(51) Int. Cl.: G06Q 10/10, G06Q 30/06, G01C 21/34, G01C 21/36, G01N 33/36, G06K 9/00

(54) **CLOTHES AND ROUTE RECOMMENDATION BASED ON WEATHER FORECAST**

(71) Applicant: Ningbo Geely Automobile Research & Development Co. Ltd., Hangzhou Bay New District Ningbo 315336 (CN); Zhejiang Geely Holding Group Co., Ltd., Zhejiang 310051 (CN)
(72) Inventor: HAGSTRÖM, Albin, 415 45 GÖTEBORG (SE); JOHANSSON, Jonathan, 417 14 GÖTEBORG (SE); SETTERBERG, Johan, 416 79 GÖTEBORG (SE)
(74) Representative: Zacco Sweden AB

(57) **Abstract**

The present invention relates to a method for providing recommendations to a user based on weather forecasts, said method comprising obtaining a schedule of the user, said schedule comprising at least one destination; obtaining weather forecasts for the user's current position and for the at least one destination of the schedule of the user; determining a recommended set of clothes and equipment based on the weather forecasts for the user's current position and the at least one destination; obtaining the user's current set of clothes and equipment; determining a difference between the current set of clothes and equipment and the recommended set of clothes and equipment; and recommending, based on a determined difference, a change of clothes or equipment or a route between the user's current position and the at least one destination.

## Description

### FIELD OF THE INVENTION

The present invention relates to a system and method for everyday assistance by providing recommendations on travel related decision points such as clothes choice, route, and/or the planning of stops.

### BACKGROUND OF THE INVENTION

There are systems available today that provide weather forecasts, and also systems that relate these weather forecasts to the schedule of a system user. These systems are able to, upon request, advice a user on what the weather will be at the location where the user will be spending his/her day, thus allowing the user to make informed decisions on e.g. clothes choice based on this.

Furthermore, since weather forecasts are geographically dependent and certain trips a user may undertake span a wide range of geographical areas, the recommendations provided by such systems are not always relevant for the entire trip. This may lead to inconvenience for the user, causing him or her to be subjected to the effects of bad weather along the route to his or her destination.

### SUMMARY OF THE INVENTION

It is an object of the present invention to alleviate at least some of the mentioned drawbacks of the prior art and to provide a method for providing a user with recommendations on what to wear and bring or which route to take based on weather forecasts, current clothes and equipment, user schedule, and/or learned user behaviour. This and other objects, which will become apparent in the following, are accomplished by a method and system as defined in the accompanying independent claims.

The term exemplary should in this application be understood as serving as an example, instance or illustration.

The present invention is at least partially based on the realisation that a user may not be fully aware of the conditions he or she will face during a trip, and that the user therefore may make choices with regards to what clothes to wear and what equipment to bring based on incomplete information. Thus, the user might for example fail to bring an umbrella because it is sunny at their current location, even though, unbeknownst to them, the weather forecast for their destination is rainfall. Having a method and a system for managing this and providing a user with recommendations as to what clothes to wear and what equipment to bring based on the weather forecast for the journey in its entirety is beneficial because it decreases the amount of discomfort a user may feel by preventing that the wrong set of clothes or equipment is brought.

The present invention is furthermore based on the realisation that providing a user with recommendations as to what clothes to wear and what equipment to bring based on the current scenario would decrease the mental load on the user and thus allow the user to focus more on other aspects of his or her life.

A scenario, in the context of the present invention, may be a combination of the user's schedule, the weather forecast for the user's current position, the weather forecast for at least one destination of the schedule of the user, the time of the day, the day of the week, the day of the month, etc.

The present invention is furthermore based on the realisation that different users may have different preferences, both regarding choice of clothes and equipment for different scenarios, and regarding the frequency and location of intermediate stops on a journey. Thus, the predicted behaviour for one user may differ from the predicted behaviour of another. One user, for example, may desire a warmer cabin climate and more frequent stops along the route of travel, while another prefers a colder cabin climate and values a swift arrival higher than having frequent stops along the way. Providing a user with personalized recommendations based on learned user behaviour would allow a vehicle implementing the method of the present invention to better meet the expectations of the user, and therefore increase the level of comfort experienced.

Finally, the present invention is based on the realization that using learned user behaviour, i.e. patterns of behaviour obtained from observing actual user behaviour and the output thereof, allows for better prediction of future user behaviour and user preferences. Said patterns of behaviour may for example be obtained by means of pattern recognition and machine learning methods using the outputs of a variety of different vehicle sensors as input. The actual user behaviour observed in order to obtain the learned user behaviour may be the actual behaviour of one user of said vehicle, or it may be the sum of the actual user behaviour of several users across a fleet of vehicles connected to a user behaviour module configured to detect patterns in user behaviour across different scenarios.

According to the first aspect of the present invention, a method for providing recommendations to a user based on weather forecasts is provided, said method comprising obtaining a schedule of the user, said schedule comprising at least one destination; obtaining weather forecasts for the user's current position and for the at least one destination of the predicted schedule of the user; determining a recommended set of clothes and equipment based on the weather forecasts for the user's current position and the at least one destination; obtaining the user's current set of clothes and equipment; determining a difference between the current set of clothes and equipment and the recommended set of clothes and equipment; and recommending, based on a determined difference, a change of clothes or equipment or a route between the user's current position and the at least one destination.

It should be understood that any number of the abovementioned steps of the method of the present invention may be performed in a different order than presented herein, or simultaneously.

In the context of the present invention, recommending means that the method generates, at an output, a signal indicative of a recommendation.

In the context of the present invention, obtaining is taken to mean either accessing, retrieving, receiving, predicting, or determining.

The method of the present invention involves obtaining a schedule of the user, e.g. by means of predicting or accessing said schedule. The schedule of the user may for example be predicted using learned user behaviour.

The method of the present invention involves obtaining weather forecasts, e.g. by means of receiving, retrieving or accessing said weather forecasts. Said weather forecasts may for example be provided as part of a weather forecasting system.

The method of the present invention involves obtaining the user's current set of clothes and equipment, e.g. by means of predicting or determining the user's current set of clothes and equipment. The prediction and determination of the user's current set of clothes and equipment will be discussed in greater detail in the following.

In the context of the present invention, a schedule is a record of a series of items such as destinations, people, meetings or activities, said series being arranged according to a system. An example of such a system may for example be a chronological listing of places to be, or a listing of a plurality of items, each of which is presented together with a time at which that item should occur.

According to one example embodiment of the first aspect of the present invention, said schedule comprises at least one destination and a scheduled time of arrival.

According to one example embodiment of the first aspect of the present invention, a route may be recommended based on a determined difference between the user's current set of clothes and equipment and the recommended set of clothes and equipment, said route comprising intermediate stops between the user's current position and the at least one destination that are chosen such that the user's current set of clothes and equipment matches the recommended set of clothes and equipment for said route.

According to one example embodiment of the first aspect of the present invention, said method further comprises obtaining required intermediate stops between the user's current position and the at least one destination; obtaining weather forecasts for any predicted intermediate stops; and determining a recommended set of clothes and equipment based on the weather forecasts for the user's current position, the at least one destination, and any required intermediate stops therebetween.

The method of this embodiment involves obtaining required intermediate stops, e.g. by means of predicting, retrieving, receiving or accessing a suggested route between the user's current position and the at least one destination, wherein said suggested route may involve intermediate stops should such be required.

A suggested route between the user's current position and the at least one destination may for example be obtained through a GPS module, e.g. in the form of an online navigational system.

In other words, the method of this embodiment may predict or determine whether any intermediate stops are required between the user's current position and the at least one destination, and obtains the weather forecast for any such intermediate stops. Thus, the method allows for providing recommendations that are additionally based on weather forecasts for the locations of said intermediate stops.

According to one example embodiment of the first aspect of the present invention, said step of obtaining required intermediate stops between the user's current position and the at least one destination is a prediction based on current vehicle status and/or learned user behaviour.

In the context of the present invention, current vehicle status is determined by obtaining vehicle status such as remaining range, fuel level, remaining charge of a battery, and/or average fuel consumption. The current vehicle status may then be used to predict whether intermediate stops are required between a user's current position and the at least one destination are needed.

In the context of the present invention, destinations and intermediate stops are geographical positions, e.g. charging stations, gas stations, rest areas or other points of interest. Additionally or alternatively, the method of the present invention may provide the required intermediate stops as ranges or areas in which a stop is determined to be required. For example, the method may determine that a stop is required within a certain distance from the user's current position, or that a stop is required in a certain area that is located between the user's current position and the at least one destination.

According to one example embodiment of the first aspect of the present invention, said method further comprises predicting whether any intermediate stops between the user's current position and the at least one destination are required based on current vehicle status and/or learned user behaviour; determining a plurality of potential intermediate stops between the user's current position and the at least one destination; obtaining weather forecasts for said plurality of potential intermediate stops; determining a plurality of potential recommended sets of clothes and equipment based on the weather forecasts for said plurality of potential intermediate stops; recommending, based on a determined difference between the user's current set of clothes and equipment and the plurality of potential recommended sets of clothes and equipment, a route between the user's current position and the at least one destination including at least one intermediate stop chosen from said plurality of potential intermediate stops.

This allows a route to be recommended, the clothing requirements of which best matches the user's current set of clothes and equipment, thus reducing the need for climate control in the vehicle leading to better fuel consumption and enabling longer driving distances while also reducing the risk of the user getting negatively affected by the weather conditions at the stops made between the user's current position and the at least one destination.

As an alternative to determining a plurality of potential recommended sets of clothes and equipment based on the weather forecasts for said plurality of potential intermediate stops, the method of the present invention may be defined by determining a potential recommended set of clothes and equipment for each one of said plurality of potential intermediate stops based on the weather forecast for said potential intermediate stop.

According to one example embodiment of the first aspect of the present invention, said step of obtaining the user's current set of clothes and equipment is a prediction done using learned user behaviour in relation to obtained weather forecasts and/or said schedule of the user.

For example, the method may predict that the user is wearing a certain set of clothes and equipment based on past user behaviour during scenarios that were similar or identical to the current scenario, e.g. with respect to weather forecast and/or schedule of the user.

This learned user behaviour may for example employ the use of an in-vehicle camera to learn what clothes the user usually wears and what equipment he/she usually brings for different scenarios.

According to one example embodiment of the first aspect of the present invention, said step of obtaining a schedule of the user is a prediction done by means of learned user behaviour.

The user behaviour module used to predict the schedule or current clothing of a user may for example be trained using machine learning methods, having variables such as time of the day, day of the week, day of the month, weather forecast for the user's current position, etc., as inputs and worn set of clothes as predicted parameter.

According to one example embodiment of the first aspect of the present invention, said step of obtaining a schedule of the user is done by means of accessing information from the user's email, phone, calendar and/or GPS.

Alternatively or additionally, the method of the present invention may use current and predicted traffic conditions between the user's current position and the at least one destination to predict said schedule.

By accessing the user's email, phone, calendar and/or GPS, the method may use information regarding for example meetings or appointments stored therein to predict the schedule of the user.

According to one example embodiment of the first aspect of the present invention, said method further comprises obtaining image data of the user and using said image data to determine the user's current set of clothes and equipment.

According to one example embodiment of the first aspect of the present invention, said step of obtaining the user's current set of clothes and equipment is done using a sensor, such as a camera.

Said image data may for example be obtained through an in-vehicle camera or in a handheld device, or it may be provided as an indoor camera in the user's home, e.g. as an indoor security camera.

The user's current set of clothes and equipment is determined using image recognition methods and/or computer vision methods.

According to the second aspect of the present invention, a system is provided, said system being configured to perform the method according to the first aspect of the present invention. With this aspect of the disclosure, similar advantages and preferred features are present as in the previously discussed first aspect of the disclosure.

According to one example embodiment of the second aspect of the present invention, said system comprises a schedule module configured to obtain a schedule of a user.

According to one example embodiment of the second aspect of the present invention, said system comprises a GPS module configured to obtain a user's current position.

According to one example embodiment of the second aspect of the present invention, said system comprises a weather forecast module configured to obtain a weather forecast for the user's current position and for the at least one destination of the predicted schedule of the user.

According to one example embodiment of the second aspect of the present invention, said system comprises a clothes and equipment recommendation module configured to determine a recommended set of clothes and equipment based on the weather forecasts for the user's current position and the at least one destination.

According to one example embodiment of the second aspect of the present invention, said system comprises a clothes and equipment module configured to obtain the user's current set of clothes and equipment.

According to one example embodiment of the second aspect of the present invention, said system comprises a difference determination module configured to determine a difference between the current set of clothes and equipment and the recommended set of clothes and equipment.

According to one example embodiment of the second aspect of the present invention, said system comprises a control module configured to recommend, based on a determined difference, a change of clothes or equipment or a route between the user's current position and the at least one destination.

According to one example embodiment of the second aspect of the present invention, said system comprises a user behaviour module configured to obtain patterns of behaviour by observing actual user behaviour in different scenarios and the output thereof, and thereby create a model for predicting future user behaviour in different scenarios.

According to one example embodiment of the second aspect of the present invention, said system comprises a vehicle status module configured to obtain vehicle status.

According to one example embodiment of the second aspect of the present invention, said system is implemented in a vehicle.

According to one example embodiment of the second aspect of the present invention, said modules may be physical computation units provided in the vehicle, and/or may be provided as modules of a cloud computation system to which the vehicle is connected.

According to a third aspect of the present invention, a non-transitory computer-readable storage medium is provided, said computer-readable storage medium storing one or more programs configured to be executed by one or more processors of a processing system, the one or more programs comprising instructions for performing the method according to the first aspect of the present invention. With this aspect of the disclosure, similar advantages and preferred features are present as in the previously discussed first aspect of the disclosure.

The term "non-transitory," as used herein, is intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link. Thus, the term "non-transitory", as used herein, is a limitation of the medium itself (i.e., tangible, not a signal) as opposed to a limitation on data storage persistency (e.g., RAM vs. ROM).

Generally, all terms used in the description are to be interpreted according to their ordinary meaning in the technical field, unless explicitly defined otherwise herein. All references to "a/an/the [element, device, component, means, step, etc.]" are to be interpreted openly as referring to at least one instance of said element, device, component, means, step, etc., unless explicitly stated otherwise.

### BRIEF DESCRIPTION OF THE DRAWINGS

These and other features and advantages of the present invention will now be further clarified and described in more detail, with reference to the appended drawings showing different embodiments of a... according to the present invention.
Figure 1 is a schematic drawing of one embodiment of the system of the present invention,
Figure 2 is a schematic drawing of another embodiment of the system of the present invention,
Figure 3 is a schematic drawing of a vehicle in which the system of the present invention is implemented,
Figure 4 is a flowchart illustrating one embodiment of the method of the present invention,
Figure 5 is a flowchart illustrating another embodiment of the method of the present invention.

### DETAILED DESCRIPTION OF EMBODIMENTS

In the following detailed description, some embodiments of the present invention will be described. However, it is to be understood that features of the different embodiments are exchangeable between the embodiments and may be combined in different ways, unless anything else is specifically indicated. Even though in the following description, numerous specific details are set forth to provide a more thorough understanding of the present invention, it will be apparent to one skilled in the art that the present invention may be practiced without these specific details. In other instances, well known constructions or functions are not described in detail, so as not to obscure the present invention.

Those skilled in the art will appreciate that the steps, services and functions explained herein may be implemented using individual hardware circuitry, using software functioning in conjunction with a programmed microprocessor or general purpose computer, using one or more Application Specific Integrated Circuits (ASICs) and/or using one or more Digital Signal Processors (DSPs). It will also be appreciated that when the present disclosure is described in terms of a method, it may also be embodied in one or more processors and one or more memories coupled to the one or more processors, wherein the one or more memories store one or more programs that perform the steps, services and functions disclosed herein when executed by the one or more processors.

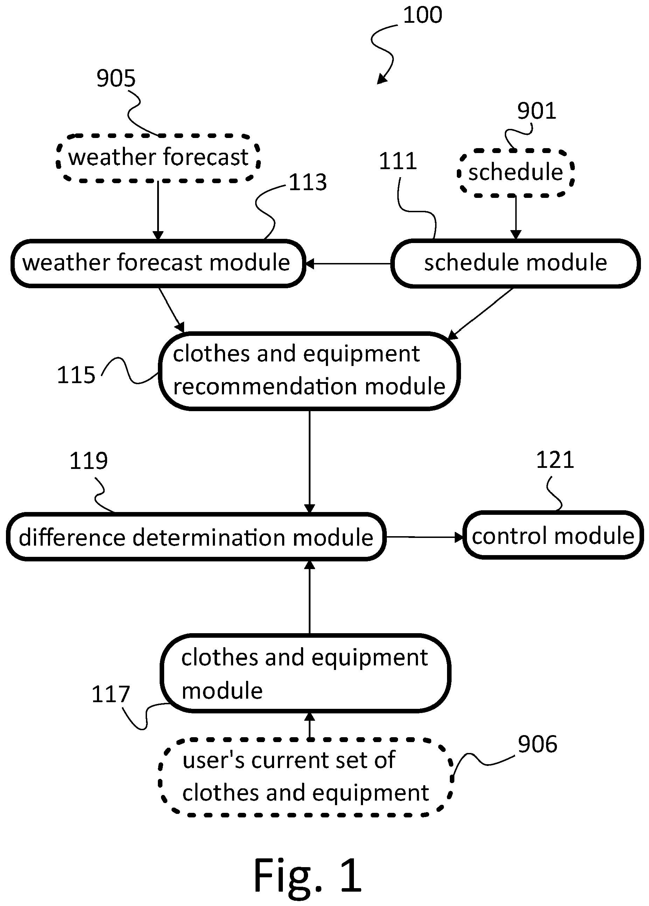

Figure 1 is a schematic drawing of the system 100 of the second aspect of the present invention, which system is configured to perform the method 1 of the first aspect of the present invention. In the following, the present invention will be described from the perspective of the method 1 to be performed by the system 100 of the present invention.

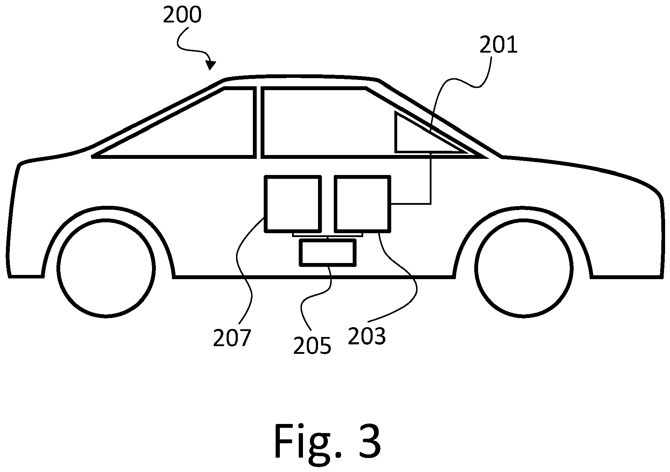

The system 100 illustrated in the following figures may be implemented in a vehicle 200, as shown in Figure 3.

The method 1 comprises obtaining a schedule 11 of the user through a schedule module 111. The schedule 901 obtained thereby comprises a record of a series of items such as destinations, people, meetings or activities. The items in the series are arranged according to a system, such as a chronological listing of places to be, or having each one of the items be provided together with a time at which that item should occur. The schedule module 111 obtains the schedule 901 by accessing information held by or associated with the user's email, phone, calendar and/or GPS. Furthermore, any required intermediate stops between the user's current position 902 and the at least one destination may also be obtained by the schedule module 111, as will be described in greater detail in relation to the second embodiment of the present invention.

Having obtained the schedule 901 of the user, a weather forecast module 113 then obtains the weather forecast 13 for the user's current position 902, any required intermediate stops, and the at least one destination of the schedule 901 by accessing a weather forecasting system 905 provided remotely of the vehicle. This allows the system 100 to provide a user with recommendations based not only on the weather forecast 905 at the current position 902, the route, and/or the destination, but based on the weather forecast 905 for the entire journey.

The obtained schedule 901 and weather forecasts 905 are then used to determine a recommended set of clothes and equipment 15 that corresponds to, i.e. provides a good fit with, the requirements posed by the forecasted weather 905 at the user's current position 902, any intermediate stops, and the at least one destination. This step is performed by a clothes and equipment recommendation module 115 which outputs, at an output, a signal indicative of a recommended set of clothes and equipment 115a.

In addition to this, the user's current set of clothes and equipment 906 is obtained 17 by means of a clothes and equipment module 117. The clothes and equipment module 117 according to this embodiment of the present invention comprises a camera 117a used to register the user's current set of clothes and equipment 906 using image recognition or computer vision methods. The camera 117a may for example be provided in a handheld device of the user, or as an indoor security camera configured to be connected to the system of the present invention.

Using the obtained current set of clothes and equipment 906 of the user and the recommended set of clothes and equipment 115a, a difference determination module 119 determines a difference 19 therebetween. The difference determined measures parameters such as rain protection, warmth, wind protection, coverage of the clothes and equipment. Thus, the system 100 and method 1 of the present invention may determine whether the user should change his or her clothes or equipment in order to increase or decrease any one of these parameters.

Upon determining a difference between the current set of clothes and equipment 906 and the recommended set of clothes and equipment 115a, a change of clothes or equipment is recommended 21 in order to better meet the requirements posed by the weather conditions at user's current position 902, at any intermediate stops required, and at the at least one destination. Additionally or alternatively, a route between the user's current position 902 and the at least one destination is recommended 21 that allows a user to avoid areas where the weather forecast 905 is such that the user's current set of clothes and equipment 906 does not meet the requirements posed thereby. An output 121a indicative of such a recommendation is then generated at an output of a control module 121 of the system. This output 121a may then be used to display the recommendation on a user interface 201 of the vehicle 200 in which the system 100 is implemented.

For example, it may be determined that the user has clothes and equipment 906 that provide little rain protection but are warm, while the weather forecast 905 for the user's current position 902, for any intermediate stops, and for the at least one destination is rain and high temperature, i.e. rain protection and cool clothes are recommended. In that case, the user may be recommended, by means of the system 100 generating an output 121 a indicative of a recommendation, to change his or her clothes and equipment 906 to something cooler that also provides better rain protection.

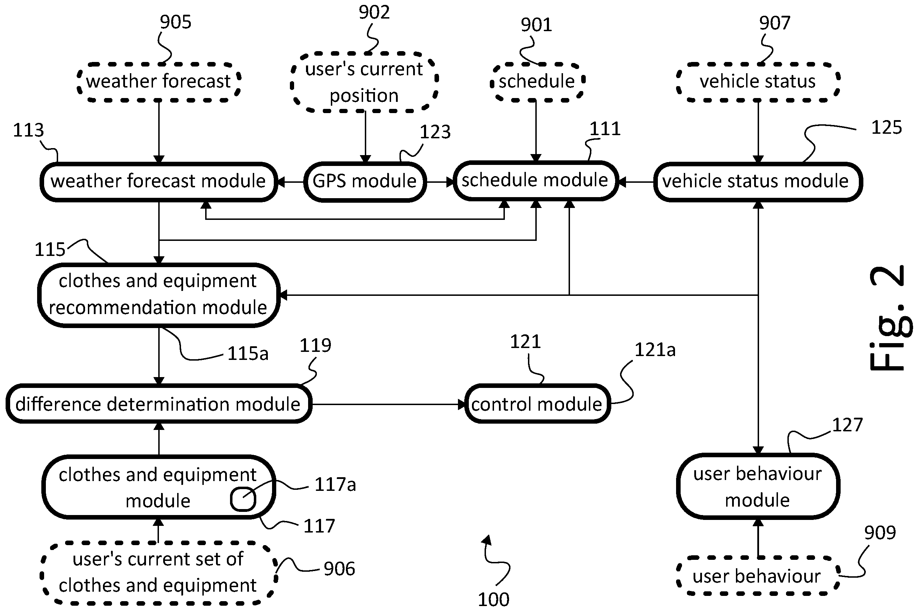

Figure 2 is a schematic drawing of an embodiment of the method 1 and system 100 of the first and second aspect of the present invention. The system 100 of Figure 2 is configured to perform one embodiment of the method 1 of the first aspect of the present invention.

In addition to the steps and modules presented in relation to Figure 1, the system 100 illustrated in Figure 2 comprises a GPS module 123 used to determine the user's current position 902 and relate this to the schedule module 111 and weather forecast module 113.

The system 100 further comprises a vehicle status module 125 used to obtain 25 vehicle status 907, such as such as remaining range, fuel level, remaining charge of a battery, and/or average fuel consumption of the vehicle 200 in which the system 100 is implemented.

Furthermore, the system 100 comprises a user behaviour module 127 that is trained on past user behaviour 909, i.e. patterns of behaviour obtained from observing actual user behaviour in different scenarios and the output thereof. Using the obtained vehicle status 907 and the output of the user behaviour module 127, the schedule module 111 predicts 11b whether any intermediate stops between the user's current position 902 and the at least one destination are required. In one embodiment, the schedule module 111 first predicts 11b whether any intermediate stops between the user's current position 902 and the at least one destination are needed, after which the schedule module 111 determines a plurality of potential intermediate stops 11c for future evaluation by the system 100. Thus, the intermediate stop that is best suited, in terms of weather and the effects thereof, for the user's current set of clothes and equipment 906 may be chosen. This is done by having a weather forecast module 113 obtain the weather forecasts 905 for each one of the plurality of intermediate stops, potential or required, the output of which is used to determine a recommended set of clothes and equipment 115a for each intermediate stop. Thus, an output 121a indicative of a suggested route may be generated at the control module 121 of the system 100, for use in displaying the recommendation to a user of the vehicle 200 on a user interface 201 provided therein.

Additionally, the clothes and equipment module 117 of one embodiment of the present invention uses the output of the user behaviour module 127, the schedule module 111, the GPS module 123, and/or the weather forecast module 113 to predict the current set of clothes and equipment 906 of the user. For example, the clothes and equipment module 117 may predict that if the weather is warm, the user is at his or her summerhouse, and is scheduled to go to the beach, a predicted set of clothes and equipment 906 may be swimwear and a towel, should this also align with the output of the user behaviour module 127.

Similarly, the schedule module 111 of one embodiment of the present invention uses the output of the user behaviour module 127, vehicle status module 125, the GPS module 123, and/or the weather forecast module 113 to predict the schedule 901 of the user. For example, the schedule module 111 may predict that if the fuel is running out, and the user's current position 902 is far away from a position that the user behaviour module identifies as a likely destination for that day, the schedule module 111 may predict that the user will first go to a gas station or charging station, after which the user will continue travel towards the predicted destination for that day.

The predictions above may alternatively be performed by the user behaviour module 127, or by any other module connected thereto, using inputs as discussed above.

Figure 3 is a schematic illustration of a vehicle 200 in which a system 100 according to the present invention is implemented. The vehicle 200 comprises a processing unit 203, a memory unit 205, a user interface 201, and a perception unit 207. The memory unit 205 is a computer-readable storage medium storing a program configured to be executed by the processing unit 203, wherein the program comprises instructions for performing the method 1 of the present invention. The user interface 201 is configured to display a recommendation based on an output 121a generated by the control module 121 of the system 100 of the present invention, and the perception unit 207 comprises modules of the system 100 associated with perception of the external world and the vehicle 200 itself.

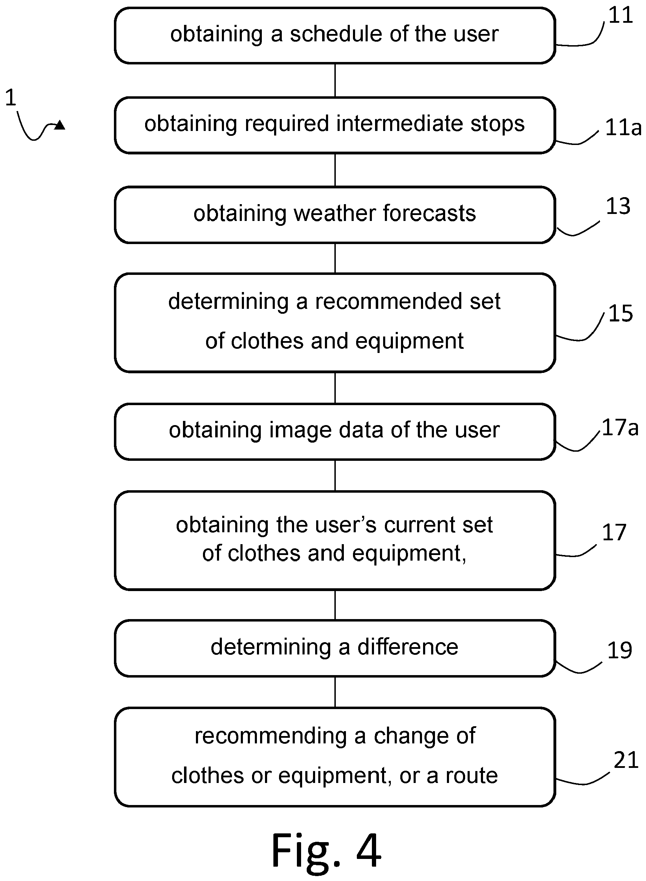

Figure 4 is a flowchart illustrating one embodiment of the method 1 of the first aspect of the present invention. The illustrated method 1 may be realized by a system 100 as described in relation to any of the figures above.

The method 1 comprises the step of obtaining a schedule of the user 11, obtaining required intermediate stops 11a, obtaining weather forecasts 13 for the user's current position and for the at least one destination of the schedule of the user, determining a recommended set of clothes and equipment 15 based on the weather forecasts for the user's current position and the at least one destination, obtaining image data of the user 17a, obtaining the user's current set of clothes and equipment 17, determining a difference 19 between the current set of clothes and equipment and the recommended set of clothes and equipment, and recommending 21, based on a determined difference, a change of clothes or equipment or a route between the user's current position and the at least one destination.

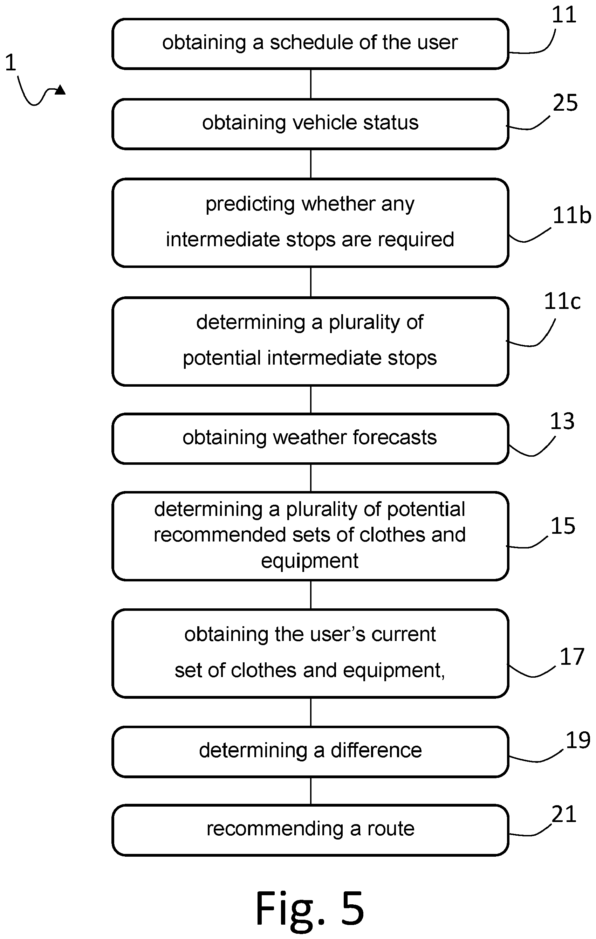

Figure 5 is a flowchart illustrating another embodiment of the method 1 of the present invention.

The method 1 of Figure 5 comprises the step of obtaining a schedule of the user 11, obtaining vehicle status 25, predicting 11b whether any intermediate stops between the user's current position and the at least one destination are required based on current vehicle status and/or learned user behaviour, determining a plurality of potential intermediate stops 11c between the user's current position and the at least one destination, obtaining weather forecasts 13 for said plurality of potential intermediate stops, determining a plurality of potential recommended sets of clothes and equipment 15 based on the weather forecasts for said plurality of potential intermediate stops, obtaining the user's current set of clothes and equipment 17, determining a difference 19 between the current set of clothes and equipment and the plurality of potential recommended sets of clothes and equipment, and recommending 21, based on a determined difference between the user's current set of clothes and equipment and the plurality of potential recommended sets of clothes and equipment, a route between the user's current position and the at least one destination including at least one intermediate stop chosen from said plurality of potential intermediate stops.

The person skilled in the art realizes that the present invention by no means is limited to the embodiments described above. The features of the described embodiments may be combined in different ways, and many modifications and variations are possible within the scope of the appended claims. In the claims, any reference signs placed between parentheses shall not be construed as limiting to the claim. The word "comprising" does not exclude the presence of other elements or steps than those listed in the claim. The word "a" or "an" preceding an element does not exclude the presence of a plurality of such elements.

## Claims

1. A method for providing recommendations to a user based on weather forecasts, wherein said method comprises
obtaining a schedule of the user, said schedule comprising at least one destination,
obtaining weather forecasts for the user's current position and for the at least one destination of the schedule of the user, determining a recommended set of clothes and equipment based on the weather forecasts for the user's current position and the at least one destination,
obtaining the user's current set of clothes and equipment,
determining a difference between the current set of clothes and equipment and the recommended set of clothes and equipment, and
recommending, based on a determined difference, a change of clothes or equipment or a route between the user's current position and the at least one destination.

2. A method according to claim 1, further comprising
obtaining required intermediate stops between the user's current position and the at least one destination,
obtaining weather forecasts for any required intermediate stops, and
determining a recommended set of clothes and equipment based on the weather forecasts for the user's current position, the at least one destination, and any required intermediate stops therebetween.

3. A method according to claim 2, wherein said step of obtaining required intermediate stops between the user's current position and the at least one destination is a prediction based on current vehicle status and/or learned user behaviour.

4. A method according to claim 1, further comprising
predicting whether any intermediate stops between the user's current position and the at least one destination are required based on current vehicle status and/or learned user behaviour, determining a plurality of potential intermediate stops between the user's current position and the at least one destination,
obtaining weather forecasts for said plurality of potential intermediate stops,
determining a plurality of potential recommended sets of clothes and equipment based on the weather forecasts for said plurality of potential intermediate stops,
recommending, based on a determined difference between the user's current set of clothes and equipment and the plurality of potential recommended sets of clothes and equipment, a route between the user's current position and the at least one destination including at least one intermediate stop chosen from said plurality of potential intermediate stops.

5. A method according to any one of the preceding claims, wherein said step of obtaining the user's current set of clothes and equipment is a prediction done using learned user behaviour in relation to obtained weather forecasts and/or said schedule of the user.

6. A method according to any one of the preceding claims, wherein said step of obtaining a schedule of the user is a prediction done by means of learned user behaviour.

7. A method according to any one of the preceding claims, wherein said step of obtaining a schedule of the user is done by means of accessing information from the user's email, phone, calendar and/or GPS.

8. A method according to any one of the preceding claims, further comprising obtaining image data of the user and using said image data to determine the user's current set of clothes and equipment.

9. A method according to any one of the preceding claims, wherein said step of obtaining the user's current set of clothes and equipment is done using a sensor, such as a camera.

10. A system configured to perform the method according to any one of the preceding claims.

11. A computer-readable storage medium storing one or more programs configured to be executed by one or more processors of a processing system, the one or more programs comprising instructions for performing the method according to any one of claims 1-9.
